# FASCICULE DE BREVET EUROPEEN

(11) **EP 3 089 900 B1**
(45) Date de publication et mention de la délivrance du brevet: **18.10.2017**
(21) Numéro de dépôt: 14827425.1
(22) Date de dépôt: 16.12.2014
(51) Int. Cl.: B60T 13/74, F16D 51/00, F16D 51/22, F16D 51/50, F16D 65/16

(54) **MOTOREDUCTEUR AVEC MOTEUR ELECTRIQUE ADAPTABLE POUR ACTIONNEUR DE FREIN A TAMBOUR**
GETRIEBEUNTERSETZUNG MIT ELEKTROMOTOR FÜR EINE TROMMELBREMSE
MOTOR-REDUCER WITH ELECTRIC MOTOR FOR DRUM BRAKE ACTUATOR

(30) Priorité: 30.12.2013 FR 1363710
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy Le Grand (FR); DUPAS, Christophe, 91120 Palaiseau (FR); PASQUET, Thierry, 94700 Vincennes (FR); MOLINARO, Alberto, 93160 Noisy Le Grand (FR)
(74) Mandataire: Pontet Allano & Associes
(86) Numéro de dépôt international: PCT/EP2014/078026
(87) Numéro de publication internationale: WO 2015/101485

(56) Documents cités:
- EP-A1- 0 594 233
- EP-A1- 0 710 595
- US-A1- 2002 000 350

## Description

L'invention se rapporte à un motoréducteur entraînant un actionneur prévu pour écarter des segments d'un frein à tambour pour véhicule, à un frein à tambour et un véhicule intégrant ce motoréducteur. Ce motoréducteur comprend un moteur électrique entraînant un arbre de sortie via un mécanisme de réduction typiquement épicycloïdal, lesquels sont renfermés dans un boîtier de motoréducteur de forme allongée.

Selon l'invention, le moteur électrique est positionné longitudinalement à l'intérieur d'un logement qui présente des caractéristiques de forme, de dimensions et de fixation de moteur, qui sont adaptées pour recevoir indifféremment une pluralité de modèles de moteurs électriques présentant des diamètres différents.

L'invention porte aussi sur un procédé d'assemblage d'un tel frein à tambour incluant une étape de choix d'un moteur électrique et d'une enveloppe cylindrique de calage complémentaire au moteur.

Plus particulièrement, ce motoréducteur entraîne un actionneur monté dans un frein à tambour pour réaliser un fonctionnement en mode "duo servo". Ce frein à tambour peut être intégré au sein d'un frein composite de type "drum in hat".

Il peut aussi former lui-même un frein à tambour bi-mode, fonctionnant en mode "simplex" en frein de service et en mode "duo servo" en frein de stationnement.

### Etat de la technique

Dans la plupart des automobiles actuelles, le frein de service est assuré par des freins à tambour ou des freins à disque. Il est fréquent de placer des freins à disque au niveau du train avant et des freins à tambour au niveau du train arrière.

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

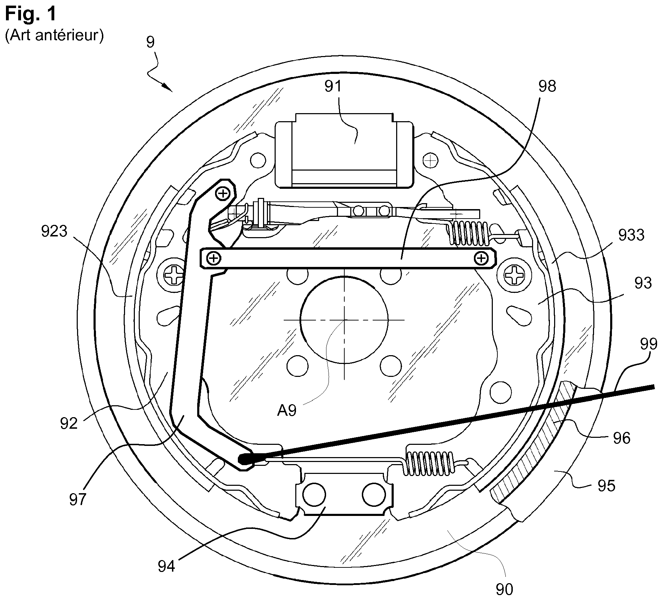

La FIGURE 1 illustre un exemple typique de frein à tambour 9 qui comprend un tambour 95 coaxial avec la roue, monté solidaire de la roue, et dont une jupe porte une piste intérieure de frottement 96. Cette jupe coiffe un mécanisme monté sur un plateau 90 coaxial avec l'axe A9 du moyeu de la roue, et qui est solidaire du demi-train portant le moyeu.

Ce mécanisme comprend deux segments 92, 93 en arcs de cercle montés face à face autour de l'axe de rotation A9 du tambour. Sur leur surface extérieure, des garnitures de frottement 923, 933 viennent appuyer sur la piste du tambour lorsque les segments sont écartés vers l'extérieur.

Dans les modes appelés "simplex" et "duplex", chaque segment est écarté à une extrémité par un actionneur 91, et son autre extrémité s'appuie tangentiellement à la rotation sur une plaque de butée 94 solidaire du plateau 90, en général par rivetage. Lorsque les segments sont mis en pression contre la piste du tambour, tout mouvement ou effort en rotation de la roue imprime un couple de rotation aux segments, qu'ils transmettent au plateau par cette plaque de butée. En configuration "simplex", les deux segments sont actionnés en leurs deux extrémités d'un même côté, typiquement par un même actionneur hydraulique 91 à double piston et fixé au plateau. C'est le mode le plus classique, qui est simple et d'un fonctionnement fiable et régulier.

La fonction de frein de stationnement consiste à maintenir un véhicule immobilisé de façon continue pendant de longues durées. Depuis longtemps, comme illustré en FIGURE 1, il est connu d'assurer cette fonction au sein du même frein à tambour que pour le frein de service, à l'aide d'un levier 97 tiré par un câble 99 lui-même maintenu par un mécanisme à cliquet. Ce levier pivote sur l'extrémité mobile d'un segment 92, et l'écarte de l'autre segment par une biellette de réaction 98.

La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement.

Bien que satisfaisant et économique comme frein de service, ce type de frein à tambour peut présenter un couple de freinage insuffisant en tant que frein de stationnement, et aussi en frein de secours.

On connaît aussi un autre mode de fonctionnement pour un frein à tambour, dit "duo servo", dans lequel l'actionneur écarte une extrémité d'un premier segment. Celui-ci s'appuie sur le tambour pendant que son autre extrémité est flottante et prend appui par une biellette flottante sur le deuxième segment par son extrémité en vis-à-vis, flottante elle aussi. L'autre extrémité du deuxième segment est ainsi la seule à prendre appui sur une plaque de butée. Ce mode est nettement plus efficace mais présente d'autres inconvénients, par exemple il est plus délicat à ajuster et s'use de façon irrégulière. Il est peu utilisé comme frein de service.

Un frein à tambour de type duo servo est parfois utilisé comme frein de stationnement exclusivement, par exemple en utilisant comme tambour l'intérieur de la cloche centrale d'un disque qui sert de frein de service, combinaison appelée "Drum in hat" et décrite dans le document EP 0 416 760.

Depuis quelques temps déjà, il a aussi été proposé de réaliser un frein à tambour qui fonctionnerait comme frein de service en mode simplex et comme frein de stationnement en mode duo servo. Ainsi, le document FR 2 697 599 propose d'ajouter à proximité de la plaque de butée un actionneur mécanique, qui s'appuie d'un côté sur une extrémité d'un segment et de l'autre sur l'extrémité d'un levier supplémentaire pour écarter les segments l'un de l'autre. Ce levier coulisse librement le long de l'autre segment, et son extrémité opposée appuie sur une biellette elle-même en appui sur l'extrémité mobile du premier segment.

En outre, il est connu d'activer électriquement les segments de freinage d'un frein à tambour. Ainsi, le document US 8 011 482 décrit un mécanisme dans lequel les segments de freinage sont écartés par une came actionnée par une biellette, elle-même déplacée en translation longitudinale par un système vis-écrou qui est actionné en rotation par un moteur électrique par l'intermédiaire d'un engrenage. Le document EP 2 195 219 propose un système de frein de stationnement dans lequel les segments de frein sont écartés l'un par rapport à l'autre par un élément fileté déplacé en translation par l'intermédiaire d'une roue dentée entraînée par une vis sans fin entraînée directement par un moteur électrique. Le document EP 0 594 233 illustre un autre exemple de frein à tambour électromécanique.

Or, il est intéressant d'intégrer un moteur électrique présentant une puissance électrique de sortie plus ou moins grande, par exemple afin d'optimiser le poids et le coût du moteur tout en produisant un couple de freinage suffisant pour le poids du véhicule et/ou pour obtenir une vitesse satisfaisante pour l'actionnement du frein.

Ainsi, il est intéressant de réaliser des actionneurs dotés de moteurs électriques présentant des caractéristiques différentes, notamment des caractéristiques dimensionnelles.

Un but de la présente invention est de proposer un élément motoréducteur pour motoriser un actionneur de frein à tambour, offrant une flexibilité de montage des différents moteurs électriques existants afin de réaliser les fonctions de frein de service, de frein de stationnement et de frein de secours.

Elle cherche aussi à proposer un élément motoréducteur qui améliore la protection contre les perturbations électromagnétiques.

Elle cherche en outre à proposer un élément motoréducteur qui améliore la diffusion de la chaleur produite par le fonctionnement du moteur électrique.

Un autre but de la présente invention est de permettre une variété et une facilité d'adaptation de ce dispositif dans un véhicule et une souplesse d'intégration dans un processus de montage d'un tel véhicule.

Encore un autre but de la présente invention est de proposer un dispositif économique, et offrant un nombre de pièces réduit, une facilité et une économie de fabrication et/ou d'assemblage et/ou de maintenance, tout en conservant tout ou partie des avantages du mode simplex, duplex et duo servo.

### Exposé de l'invention

Selon un premier aspect de l'invention, un élément motoréducteur de motorisation d'un actionneur agencé pour écarter des segments d'un frein à tambour pour véhicule, notamment automobile, ledit élément motoréducteur comprenant :
- au moins un, et par exemple un seul, moteur électrique rotatif selon un axe entraînant, via un mécanisme de réduction par exemple épicycloïdal, un arbre de sortie apte à être connecté audit actionneur,
- un boîtier de motoréducteur de forme allongée, de préférence cylindrique, renfermant l'au moins un moteur électrique et le mécanisme de réduction,
caractérisé en ce que le moteur électrique est positionné à l'intérieur d'un logement de moteur au sein dudit boîtier, de façon longitudinale par rapport à son axe de rotation, ledit logement débouchant hors du boîtier par une ouverture d'entrée,
et en ce que le logement de moteur du boîtier de motoréducteur présente des caractéristiques, incluant au moins une forme géométrique, des dimensions et des moyens de fixation de moteur, qui sont adaptées pour recevoir indifféremment une pluralité de modèles de moteurs électriques présentant des diamètres différents par rapport audit axe de rotation.

L'élément motoréducteur selon l'invention permet d'offrir une flexibilité quant au montage des différents moteurs électriques existants en fonction de l'application désirée. Avantageusement, le boîtier motoréducteur, de préférence cylindrique, présente un diamètre suffisamment grand pour recevoir indifféremment des moteurs électriques de dimensions diverses et/ou de puissances électriques différentes.

Selon d'autres modes de réalisation, le boîtier motoréducteur a différentes formes et différentes dimensions.

Selon un mode de réalisation préféré, au moins une enveloppe cylindrique de calage, de préférence tubulaire, est montée autour et au contact de l'au moins un moteur électrique et en contact radial avec une paroi interne du logement de moteur, permettant de maintenir en position et sans jeu le moteur électrique par rapport au boîtier motoréducteur. De cette manière, il est simple de positionner et centrer le moteur électrique dans le boîtier motoréducteur. En outre, cela permet de limiter le nombre de pièces à fabriquer par rapport aux différentes applications puisqu'il faut seulement, une fois le moteur électrique choisi, changer d'enveloppe de calage.

Selon un perfectionnement, un couvercle arrière, fermant l'ouverture du logement de moteur du boîtier, présente une enveloppe cylindrique de calage dite arrière s'étendant axialement d'un seul tenant depuis la paroi du couvercle arrière et entourant l'au moins un moteur électrique en contact radial, de façon à maintenir en position sans jeu ledit moteur électrique, notamment en association avec une enveloppe cylindrique de calage entourant ledit moteur, par rapport au boîtier motoréducteur. Le centrage du moteur électrique au niveau de son extrémité est alors amélioré.

Avantageusement, l'enveloppe cylindrique de calage arrière entoure le moteur électrique sur toute sa longueur. Ainsi, une seule pièce permet à la fois de centrer le moteur électrique et de fermer le boîtier du motoréducteur.

Avantageusement, au moins une enveloppe cylindrique de calage est réalisée d'une matière formant un écran contre les perturbations électromagnétiques produites par l'au moins un moteur électrique.

De plus au moins une enveloppe cylindrique de calage est réalisée d'une matière conduisant la chaleur de façon à réaliser un diffuseur thermique pour la chaleur produite par l'au moins un moteur électrique.

Selon un deuxième aspect, l'invention propose un actionneur de frein à tambour, dit dispositif d'écartement, qui est motorisé par un élément motoréducteur en particulier conforme au premier aspect de l'invention. L'actionneur est agencé pour écarter deux segments d'un frein à tambour de façon à réaliser une fonction de freinage, notamment de frein de stationnement et/ou de frein de service.

Selon un troisième aspect de l'invention, celle-ci propose un frein à tambour pour véhicule ou sous ensemble de véhicule, notamment routier, comprenant des segments munis de garnitures de frottement et susceptibles d'être écartés l'un de l'autre pour interagir par frottement avec un tambour de frein pour réaliser une fonction de freinage. Le frein à tambour comprend un actionneur selon l'aspect précédent, pour réaliser ledit écartement des segments.

Selon un quatrième aspect de l'invention, celle-ci propose un frein à tambour dans lequel ledit actionneur selon l'invention forme un deuxième actionneur apte à assurer une deuxième fonction de freinage, notamment de frein de stationnement ou de secours, au sein d'un frein à tambour assurant une première fonction de freinage, notamment de service, sous l'effet d'un premier actionneur agencé pour écarter l'une de l'autre des premières extrémités des deux segments, dites extrémités mobiles, tandis que leurs deux secondes extrémités, situées du côté opposé, dites extrémités de butée, viennent en butée sur un élément d'ancrage fixe par rapport au plateau. Le deuxième actionneur est alors agencé pour écarter l'une de l'autre les extrémités de butée des segments, tandis que leurs extrémités mobiles sont en appui l'une sur l'autre par l'intermédiaire d'un élément intercalaire mobile vis-à-vis du plateau, et que lesdites extrémités de butée sont susceptibles, l'une seule à la fois, de venir en appui contre un élément d'ancrage fixe par rapport au plateau. Une telle particularité peut former un frein à tambour bi-mode avec un mode simplex et un mode duo servo.

Selon un cinquième aspect, l'invention propose un dispositif de frein pour véhicule ou sous ensemble de véhicule, notamment routier, comprenant un disque de frein interagissant avec des plaquettes de frein pour réaliser une première fonction de freinage, notamment de frein de service, et un dispositif de frein à tambour selon l'invention pour assurer une deuxième fonction de freinage, notamment de frein de stationnement et/ou de secours et dans lequel son tambour est solidaire de, et coaxial avec, ledit disque de frein. Une telle particularité peut former un frein à deux mécanismes de type appelé drum-in-hat, dont le mécanisme de frein à tambour fonctionne en duo servo.

Selon un autre aspect, l'invention propose un véhicule ou sous-ensemble de véhicule comprenant un élément actionneur en particulier conforme à l'un ou plusieurs des aspects précédents.

Selon encore un autre aspect, l'invention propose un procédé d'assemblage d'un élément motoréducteur ou d'un actionneur ou d'un frein à tambour en particulier conforme à l'un ou plusieurs des aspects précédents, dans lequel le procédé comprend les opérations suivantes, dans cet ordre ou dans un autre ordre :
- choisir un moteur électrique d'un diamètre déterminé autour d'un axe de rotation, au sein d'une pluralité de moteurs de diamètres différents ;
- choisir une enveloppe de calage présentant une dimension adaptée pour entourer en contact radial le moteur électrique choisi et permettre un positionnement sans jeu entre ledit moteur électrique et le boîtier du motoréducteur ;
- assembler ledit moteur et ladite enveloppe de calage ensemble et à l'intérieur du logement du boîtier motoréducteur ;
- fixer le couvercle arrière sur le boîtier.

De cette manière, il est facile d'intégrer différents moteurs électriques dans le processus de montage d'un élément motoréducteur et plus généralement d'un dispositif de frein à tambour.

Ces particularités confèrent à l'invention plusieurs avantages. Tout d'abord, il permet d'offrir une flexibilité de montage des différents moteurs électriques existants, de par la forme standard du boîtier motoréducteur ainsi réalisé, afin de réaliser les fonctions de frein de service, de frein de stationnement et de frein de secours. En outre les modifications apportées sont simples puisqu'il suffit d'ajouter une enveloppe de calage en fonction du moteur électrique choisi. L'élément motoréducteur ainsi constitué reste économique, et offre un nombre de pièces réduit, une facilité et une économie de fabrication et/ou d'assemblage et/ou de maintenance, tout en conservant tout ou partie des avantages des dispositifs existants. Enfin la présence des enveloppes de calage permet de réaliser astucieusement une protection contre les perturbations électromagnétiques et de réaliser un diffuseur thermique pour la chaleur produite par le moteur électrique.

L'invention permet d'améliorer la flexibilité de conception et d'intégration du motoréducteur et de l'actionneur du frein qu'il entraîne, et de leur fabrication au sein de chaînes de fabrication pouvant travailler sur plusieurs modèles différents ou assemblés avec des options différentes.

### Liste des figures

D'autres particularités et avantages de l'invention apparaîtront à la lecture de la description détaillée de mises en oeuvre et de modes de réalisation nullement limitatifs, et des dessins annexés où :
- la FIGURE 1 est une vue de face, selon l'axe de rotation, illustrant un exemple d'art antérieur d'un mécanisme de frein à tambour de type simplex avec une fonction de frein de stationnement obtenue par un levier actionné par câble ;
- la FIGURE 2 est une vue en perspective d'un élément motoréducteur, sans son couvercle arrière, lors d'un assemblage avec un boîtier secondaire d'un actionneur de frein à tambour, dans un exemple de mode de réalisation de l'invention ;
- la FIGURE 3 est une vue éclatée de l'ensemble motoréducteur dans un exemple de mode de réalisation de l'invention ;
- la FIGURE 4 est une vue en perspective et écorché partiel d'un actionneur de frein dans un exemple de mode de réalisation de l'invention ;
- la FIGURE 5 est une vue en perspective d'un mécanisme de frein à tambour "bi-mode" dans un exemple de mode de réalisation de l'invention.

### Description d'exemples de modes de réalisation

Ces modes de réalisation n'étant nullement limitatifs, on pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur.

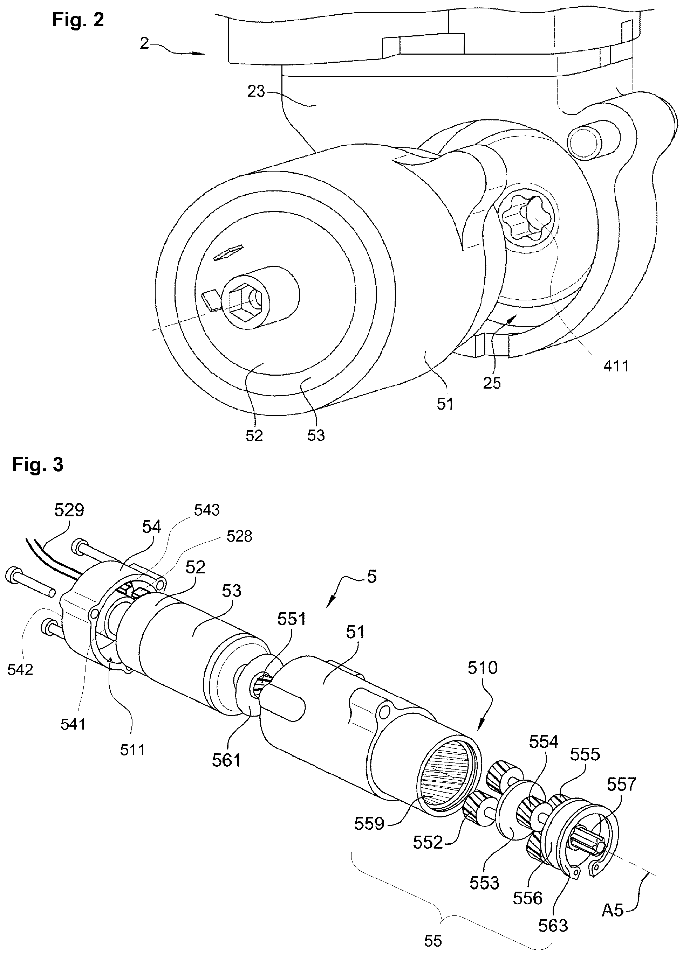

Dans le mode de réalisation représenté à la FIGURE 2 et FIGURE 3, l'ensemble motoréducteur 5 comprend un moteur électrique 52, par exemple un moteur à courant continu de forme globalement cylindrique. Suivant les caractéristiques techniques désirées, différents moteurs électriques sont utilisés pour faire varier la puissance de sortie de l'élément motoréducteur 5. Par exemple, en fonction du poids du véhicule à ralentir ou de la vitesse d'actionnement du frein à tambour, le couple à fournir par le moteur électrique 52 est plus ou moins élevé.

L'ensemble motoréducteur 5 comprend un boîtier 51 de forme globalement cylindrique renfermant le moteur électrique 52. A la figure 3, l'ensemble motoréducteur est fermé au niveau de son ouverture d'entrée 511 par un couvercle arrière 54 qui s'assemble de façon étanche, par rapport à la poussière, avec le boîtier de motoréducteur 51. Le couvercle arrière 54 est traversé de façon étanche par les fils électriques 529 d'alimentation et/ou de commande du moteur.

Le boîtier 51 est prévu avec un logement intérieur cylindrique d'un diamètre suffisamment grand pour recevoir indifféremment plusieurs modèles de moteurs électriques présentant des diamètres différents. Il est ainsi possible de fabriquer des motoréducteurs 5 de plusieurs valeurs de puissance différentes avec un même modèle de boîtier, en utilisant des moteurs de plusieurs puissances différentes et donc de plusieurs diamètres différents, par exemple jusqu'à 34 mm.

Pour bien positionner et maintenir le moteur électrique 52 dans le boîtier 51, quel que soit le diamètre du moteur, l'élément motoréducteur 5 comprend une enveloppe cylindrique de calage 53 qui s'emboîte sur le moteur électrique. L'enveloppe cylindrique 53 a une épaisseur représentant la différence entre le rayon du moteur 52 et celui du logement intérieur du boîtier 51. Pour une gamme donnée de moteurs de diamètres différents, il suffit ainsi de fabriquer une gamme d'enveloppes aux diamètres correspondants, ce qui est plus simple et économique que de fabriquer des boîtiers de dimensions différentes.

La carter du moteur 52 comporte au moins une dent 528 excentrée qui s'emboîte axialement dans un évidement 543 du couvercle 54 pour immobiliser le moteur 52 à l'encontre de toute rotation dans le boîtier 51.

Selon un mode de réalisation représenté à la FIGURE 3, le couvercle 54 présente une enveloppe cylindrique de calage arrière 541 s'étendant axialement d'un seul tenant depuis la paroi 542 du couvercle 54, et qui participe au centrage du moteur électrique 52 en entourant l'arbre de rotation (non visible) au niveau de l'ouverture d'entrée 511 du moteur.

Alternativement, le couvercle arrière 54 a également une enveloppe de calage arrière qui entoure et s'emboîte sur le moteur électrique 52 dans le prolongement de l'enveloppe de calage 53.

Selon un autre mode de réalisation, l'enveloppe cylindrique de calage arrière présente une forme plus allongée que dans le cas précédent, de façon à recouvrir toute la longueur du moteur 52. Ainsi, le couvercle arrière 54 et les enveloppes de calage 53 et 541 forment une seule et même pièce.

Ainsi, la gamme de moteurs différents peut correspondre à une gamme de couvercles différents, pour un même boîtier 51.

Avantageusement, l'enveloppe cylindrique de calage 53, ou le couvercle 54 s'il la remplace, est en outre réalisée d'une matière qui forme un écran contre les perturbations électromagnétiques et/ou qui réalise un diffuseur thermique pour la chaleur produite par le moteur.

### Description du motoréducteur par rapport à l'actionneur

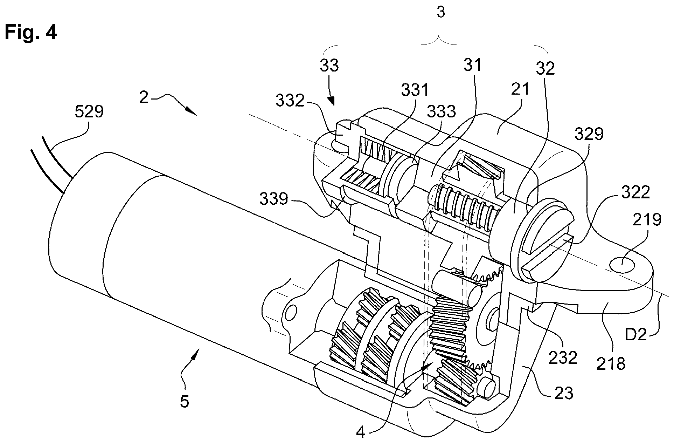

Dans le mode de réalisation de la FIGURE 4, le motoréducteur 5 est assemblé de façon étanche avec un boîtier secondaire 23 de l'actionneur 2. Le boîtier 23 est muni d'un logement 25 pour recevoir le boîtier 51. Le boîtier 51 est fixé au boîtier 23 d'une façon empêchant le boîtier 51 de tourner autour de son axe par rapport au boîtier secondaire 23 lui-même rigidement fixé à un plateau support 10 de frein. L'arbre de sortie 557 de l'élément motoréducteur 5 est couplé avec un alésage axial portant une forme intérieure d'entraînement (visible à la FIGURE 2) d'une roue d'entrée d'un sous-ensemble de transmission 4. L'arbre de sortie 557 présente une forme d'entraînement complémentaire (visible à la FIGURE 3). La géométrie de ces deux formes d'entraînement complémentaires est avantageusement choisie d'un type qui permet entre elles un certain jeu angulaire avec peu ou pas de dommages et de pertes de rendement de la puissance transmise. Cette géométrie est ici de type multi-lobulaire, par exemple à six branches ou hexalobulaire tel que défini par la norme ISO 10664, ou dans une version à cinq branches, ou l'une ou l'autre des versions proposées sous le nom de « Torx » par la société Textron.

La rotation de l'arbre de sortie 557 de l'élément motoréducteur 5 est transmise à un ensemble d'actionnement linéaire 3, par le sous-ensemble de transmission 4 comprenant des roues dentées à axes parallèles, engrenées entre elles et montées pour transmettre le mouvement rotatif de la motorisation à l'un des éléments de l'ensemble d'actionnement linéaire. Les axes de ces roues dentées sont aussi parallèles à l'axe de rotation de l'ensemble motoréducteur 5 ainsi qu'à la direction D2 du mouvement linéaire obtenu.

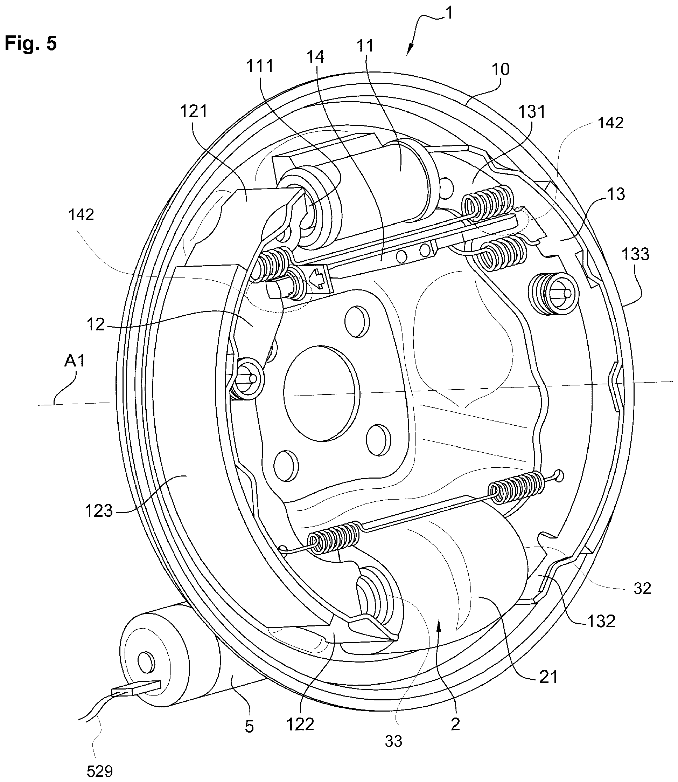

L'ensemble d'actionnement 3 est monté dans un boîtier principal 21 qui sert d'ancrage du dispositif d'actionnement sur le plateau 10, comme illustré à la FIGURE 5. Le boîtier principal 21 et le boîtier secondaire 23 sont assemblés entre eux pour renfermer de façon étanche (au moins par rapport à la poussière) le sous-ensemble de transmission 4 comprenant plusieurs roues dentées à contact extérieur, ici trois roues dentées à denture hélicoïdale corrigée.

La FIGURE 5 représente un mécanisme de frein à tambour "bi-mode" dans un exemple de mode de réalisation de l'invention où plus particulièrement le plateau support 10 présente une ouverture afin de loger le deuxième actionneur 2. Ce mode de réalisation est mis en oeuvre avec différents types d'actionneurs pour le mode de frein de service, et différents type de motorisation pour l'actionneur de frein de stationnement ou de secours.

Ce frein à tambour 1 provoque un couple de freinage entre le tambour (non représenté ici) et le plateau 10 en mouvement de rotation l'un par rapport à l'autre autour d'un axe de rotation A1. Dans une architecture classique de véhicule routier, le plateau 10 est fixé en rotation sur le châssis du véhicule, en général par l'intermédiaire d'un train ou d'un demi-train roulant suspendu. Le tambour est solidaire de la roue, et est fixé en translation et guidé en rotation autour de l'axe A1 par le moyeu et ses roulements, non représentés ici.

En mode frein de service, le couple de freinage est créé par absorption d'énergie sous l'effet d'un frottement entre :
- d'une part, la piste de frottement portée par une surface intérieure dudit tambour, de façon similaire au tambour de la FIGURE 1,
- et d'autre part des garnitures de frottement 123, 133 portées par un premier et un deuxième segments 12, 13.

Ce frottement est susceptible d'être obtenu par écartement des segments vers l'extérieur sous l'effet d'un premier actionneur 11, ici un vérin hydraulique qui est fixé au plateau 10. Depuis la position de repos ou depuis la position de freinage de stationnement, ce premier actionneur 11 amène ainsi le mécanisme en position de freinage de service, et le retour à la position de repos est réalisé par exemple par des ressorts de rappel reliant entre eux les deux segments.

Dans cet exemple, le frein à tambour est agencé pour fonctionner en mode simplex lorsqu'il est actionné en tant que frein de service : le premier actionneur 11 est un "cylindre de roue" à deux pistons 111 opposés, qui actionnent chacun l'un des segments 12, 13 en écartant l'une de l'autre leurs deux extrémités en vis-à-vis 121, 131, c'est-à-dire celles situées d'un même côté de l'axe de rotation A1, ici appelées "extrémités mobiles" et situées en haut de la figure. A son extrémité opposée 122, 132, dite extrémité de butée, chaque segment s'appuie sur le plateau 10 par un élément d'ancrage solidaire du plateau, et formant ainsi une butée pour ce segment. L'élément d'ancrage transmet au moins en partie le couple de freinage entre segments et plateau. Dans cet exemple, l'élément d'ancrage des deux segments est réalisé par le boîtier 21 du deuxième actionneur 2, ici appelé écarteur. Le deuxième actionneur 2 est fixé au plateau 10 par le boîtier 21. Dans l'exemple illustré par la FIGURE 1, l'élément d'ancrage est réalisé par une plaque de butée 94 en général rivetée sur le plateau support 90.

Le deuxième actionneur 2 comprend un ensemble d'actionnement qui, en mode frein de stationnement ou de secours, appuie sur les extrémités de butée 122, 132 des segments 12, 13 pour les écarter l'une de l'autre, et mettre ainsi les segments en appui contre la piste de frottement du tambour.

Depuis la position de repos, ou depuis la position de freinage de service, ce deuxième actionneur 2 amène ainsi le mécanisme en position de freinage de stationnement, et le retour à la position de repos est réalisé par exemple par les ressorts de rappel déjà décrits plus haut pour le frein de service.

Les enveloppes de calage 53 et 541 du motoréducteur, ou même le couvercle arrière 54, représentent un coût et des contraintes faibles dans la conception et la fabrication, en particulier par rapport au moteur 52 et au boîtier 51 de motoréducteur. Un même boîtier 51 permet ainsi d'utiliser le moteur le plus adapté pour un compromis optimisé, simplement en choisissant l'enveloppe de calage correspondant au moteur choisi, y compris sur le lieu de fabrication.

Il est ainsi possible par exemple de prévoir des gammes de véhicules avec différentes options de types de frein, de limiter les approvisionnements au sein d'une même chaîne de montage, ou d'adapter des chaînes existantes ou des modèles de véhicule existants pour les doter de ces différentes options, à moindre coût et de façon souple.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

### Nomenclature

- 1: frein à tambour
- 10: plateau support
- 11: premier actionneur - cylindre de roue - frein de service
- 111, 112: pistons de cylindre de roue
- 12, 13: segments
- 121, 131: extrémités mobiles des segments
- 122, 132: extrémités de butée des segments
- 123, 133: garnitures de frottement
- 14: élément intercalaire - biellette de rattrapage de jeu
- 2: deuxième actionneur - écarteur - frein de stationnement ou de secours
- 21: boîtier principal d'écarteur
- 23: boîtier secondaire d'écarteur
- 24: logement de la cartouche dans le boîtier secondaire
- 25: logement de motoréducteur dans le boîtier secondaire
- 3: ensemble d'actionnement linéaire
- 31: écrou cannelé de système vis-écrou
- 32: vis de système vis-écrou, formant piston
- 33: piston élastique linéaire - "spring package"
- 4: sous-ensemble de transmission - cartouche d'engrenages
- 5: ensemble motoréducteur
- 51: boîtier de motoréducteur
- 511: ouverture d'entrée cylindrique - logement de moteur
- 52: moteur électrique
- 528: dent
- 529: alimentation électrique du moteur
- 53: enveloppe cylindrique de calage - formant écran électromagnétique et diffuseur thermique
- 54: couvercle arrière de moteur
- 541: forme de calage du couvercle arrière
- 542: paroi du couvercle arrière
- 543: évidement
- 55: mécanisme de réduction épicycloïdal
- 557: arbre de sortie

### Art Antérieur

- 9: frein à tambour
- 90: plateau support
- 91: actionneur
- 92, 93: segments
- 923, 933: garnitures de frottement
- 94: plaque de butée
- 95: tambour de roue
- 96: piste de frottement du tambour
- 97: levier de frein de stationnement
- 98: biellette de réaction du frein de stationnement
- 99: câble de commande de frein de stationnement

## Revendications

1. Elément motoréducteur (5) de motorisation d'un actionneur (2) agencé pour écarter des segments d'un frein à tambour pour véhicule, notamment automobile, ledit élément motoréducteur comprenant :
- au moins un, et par exemple un seul, moteur électrique (52) rotatif selon un axe A5 entraînant, via un mécanisme de réduction (55), un arbre de sortie (557) apte à être connecté audit actionneur,
- un boîtier de motoréducteur (51) de forme allongée, de préférence cylindrique, renfermant l'au moins un moteur électrique (52) et le mécanisme de réduction (55),
**caractérisé en ce que** le moteur électrique (52) est positionné à l'intérieur d'un logement de moteur (25) au sein dudit boîtier, de façon longitudinale par rapport à son axe de rotation A5, ledit logement débouchant hors du boîtier par une ouverture d'entrée,
et **en ce que** le logement de moteur du boîtier de motoréducteur (51) présente des caractéristiques, incluant au moins une forme géométrique, des dimensions et des moyens de fixation de moteur, qui sont adaptées pour recevoir indifféremment une pluralité de modèles de moteurs électriques présentant des diamètres différents par rapport audit axe de rotation A5.

2. Elément motoréducteur (5) pour frein à tambour selon la revendication 1, **caractérisé en ce qu'**au moins une enveloppe cylindrique de calage (53), de préférence tubulaire, est montée autour et au contact de l'au moins un moteur électrique (52) et en contact radial avec une paroi interne du logement de moteur, permettant de maintenir en position et sans jeu le moteur électrique (52) par rapport au boîtier de motoréducteur (51).

3. Elément motoréducteur (5) pour frein à tambour selon l'une quelconque des revendications 1 ou 2, **caractérisé en ce qu'**un couvercle arrière (54), fermant l'ouverture du logement de moteur du boîtier (51), présente une enveloppe cylindrique de calage dite arrière (541) s'étendant axialement (A5) d'un seul tenant depuis la paroi (542) du couvercle arrière et entourant l'au moins un moteur électrique (52) en contact radial, de façon à maintenir en position sans jeu ledit moteur électrique (52), notamment en association avec une enveloppe cylindrique de calage (53) entourant ledit moteur, par rapport au boîtier motoréducteur (51).

4. Elément motoréducteur (5) pour frein à tambour selon la revendication 2 ou 3, **caractérisé en ce que** l'au moins une enveloppe cylindrique de calage (53, 541) est réalisée d'une matière formant un écran contre les perturbations électromagnétiques produites par l'au moins un moteur électrique (52).

5. Elément motoréducteur (5) pour frein à tambour selon l'une des revendications 2 à 4, **caractérisé en ce que** l'au moins une enveloppe cylindrique de calage (53, 541) est réalisée d'une matière conduisant la chaleur de façon à réaliser un diffuseur thermique pour la chaleur produite par l'au moins un moteur électrique (52).

6. Actionneur (2) de frein à tambour agencé pour écarter deux segments d'un frein à tambour de façon à réaliser une fonction de freinage, **caractérisé en ce qu'**il est motorisé par un élément motoréducteur (5) selon l'une quelconque des revendications 1 à 5.

7. Frein à tambour pour véhicule ou sous ensemble de véhicule, notamment routier, comprenant des segments munis de garnitures de frottement susceptibles d'être écartés l'un de l'autre pour interagir par frottement avec un tambour pour réaliser une fonction de freinage, **caractérisé en ce que** ledit dispositif comprend un actionneur selon la revendication précédente, qui est agencé pour réaliser ledit écartement des segments.

8. Frein à tambour selon la revendication précédente, **caractérisé en ce que** l'actionneur (2) selon l'invention forme un deuxième actionneur apte à assurer une deuxième fonction de freinage, notamment de frein de stationnement ou de secours, au sein d'un frein à tambour (1) assurant une première fonction de freinage, notamment de service (11), sous l'effet d'un premier actionneur (11) agencé pour écarter l'une de l'autre des premières extrémités (121, 131) des deux segments (12, 13), dites extrémités mobiles, tandis que leurs secondes extrémités (122, 132) situées du côté opposé, dites extrémités de butée, viennent en butée sur un élément d'ancrage (21) fixe par rapport au plateau (10) ;
et **en ce que** ledit deuxième actionneur est agencé pour écarter l'une de l'autre les extrémités de butée (122, 132) des segments, tandis que leurs extrémités mobiles (121, 131) sont en appui l'une sur l'autre par l'intermédiaire d'un élément intercalaire (14) mobile vis-à-vis du plateau (10), et que lesdites extrémités de butée sont susceptibles, l'une seule à la fois, de venir en appui contre un élément d'ancrage (21) fixe par rapport au plateau (10).

9. Frein pour véhicule ou sous ensemble de véhicule, notamment routier, comprenant un disque de frein interagissant avec des plaquettes de frein pour réaliser une première fonction de freinage, notamment de frein de service,
ledit dispositif comprenant en outre un dispositif de frein à tambour (1) selon la revendication 7 agencé pour assurer une deuxième fonction de freinage, notamment de frein de stationnement et/ou de secours, et en ce que son tambour est solidaire de, et coaxial avec, ledit disque de frein.

10. Véhicule ou sous-ensemble de véhicule comprenant un élément actionneur (2) selon la revendication 6, ou un frein selon l'une quelconques des revendications 7 à 9.

11. Procédé d'assemblage d'un élément motoréducteur (5) selon l'une quelconque des revendications 1 à 5, ou d'un actionneur selon la revendication 6, ou d'un frein à tambour selon l'une quelconque des revendications 7 à 9, ou d'un véhicule selon la revendication 10,
ledit procédé étant **caractérisé en ce qu'**il comprend les opérations suivantes, dans cet ordre ou dans un autre ordre :
- choisir un moteur électrique (52) d'un diamètre déterminé autour d'un axe de rotation A5, au sein d'une pluralité de moteurs de diamètres différents ;
- choisir une enveloppe de calage présentant une dimension adaptée pour entourer en contact radial le moteur électrique (52) choisi et permettre un positionnement sans jeu entre ledit moteur électrique (52) et le boîtier (51) du motoréducteur (5) ;
- assembler ledit moteur et ladite enveloppe de calage ensemble et à l'intérieur du logement du boîtier motoréducteur (51) ;
- fixer le couvercle arrière (54) sur le boîtier (51).

## Patentansprüche

1. Getriebemotorelement (5) zur Motorisierung eines Aktors (2), der dazu eingerichtet ist, Backen einer Trommelbremse für ein Fahrzeug, insbesondere Kraftfahrzeug, zu spreizen, wobei das Getriebemotorelement umfasst:
- wenigstens einen, und beispielsweise einen einzigen, um eine Achse A5 drehbaren Elektromotor (52), der über einen Untersetzungsmechanismus (55) eine Abtriebswelle (557), die geeignet ist, mit dem Aktor verbunden zu werden, antreibt,
- ein Getriebemotorgehäuse (51) mit langgestreckter, vorzugsweise zylindrischer Form, das den wenigstens einen Elektromotor (52) und den Untersetzungsmechanismus (55) einschließt,
**dadurch gekennzeichnet, dass** der Elektromotor (52) in einer Motoraufnahme (25) innerhalb des Gehäuses in Bezug auf seine Rotationsachse A5 längs positioniert ist, wobei die Aufnahme außerhalb des Gehäuses über eine Eingangsöffnung ausmündet,
und dass die Motoraufnahme des Getriebemotorgehäuses (51) Merkmale, die wenigstens eine geometrische Form, Abmessungen und Motorbefestigungsmittel einschließen, aufweist, welche dazu ausgelegt sind, eine Vielzahl von Modellen von Elektromotoren, die unterschiedliche Durchmesser in Bezug auf die Rotationsachse A5 aufweisen, gleichermaßen aufzunehmen.

2. Getriebemotorelement (5) für eine Trommelbremse nach Anspruch 1, **dadurch gekennzeichnet, dass** wenigstens ein zylindrischer, vorzugsweise rohrförmiger, Festsetzmantel (53) um und in Kontakt mit dem wenigstens einen Elektromotor (52) sowie in radialem Kontakt mit einer Innenwand der Motoraufnahme angebracht ist, der ermöglicht, den Elektromotor (52) gegenüber dem Getriebemotorgehäuse (51) in Position und spielfrei zu halten.

3. Getriebemotorelement (5) für eine Trommelbremse nach einem der Ansprüche 1 oder 2, **dadurch gekennzeichnet, dass** eine hintere Abdeckung (54), welche die Öffnung der Motoraufnahme des Gehäuses (51) verschließt, einen zylindrischen, sogenannten hinteren Festsetzmantel (541) aufweist, der sich von der Wand (542) der hinteren Abdeckung einstückig axial (A5) erstreckt und der den wenigstens einen Elektromotor (52) in radialem Kontakt umschließt, um den Elektromotor (52), insbesondere in Verbindung mit einem den Motor umschließenden zylindrischen Festsetzmantel (53), gegenüber dem Getriebemotorgehäuse (51) spielfrei in Position zu halten.

4. Getriebemotorelement (5) für eine Trommelbremse nach Anspruch 2 oder 3, **dadurch gekennzeichnet, dass** der wenigstens eine zylindrische Festsetzmantel (53, 541) aus einem Material ausgebildet ist, das einen Schutzschild gegen die elektromagnetischen Störungen, welche durch den wenigstens einen Elektromotor (52) erzeugt werden, bildet.

5. Getriebemotorelement (5) für eine Trommelbremse nach einem der Ansprüche 2 bis 4, **dadurch gekennzeichnet, dass** der wenigstens eine zylindrische Festsetzmantel (53, 541) aus einem wärmeleitenden Material ausgebildet ist, um einen Wärmeableiter für die durch den wenigstens einen Elektromotor (52) erzeugte Wärme auszubilden.

6. Aktor (2) einer Trommelbremse, der dazu eingerichtet ist, zwei Backen einer Trommelbremse zu spreizen, um eine Bremsfunktion zu erfüllen, **dadurch gekennzeichnet, dass** er durch ein Getriebemotorelement (5) nach einem der Ansprüche 1 bis 5 motorisiert ist.

7. Trommelbremse für ein Fahrzeug oder eine Untereinheit eines Fahrzeugs, insbesondere Straßenfahrzeugs, umfassend mit Reibbelägen ausgestattete Backen, die geeignet sind, voneinander entfernt zu werden, um mit einer Trommel durch Reibung zu interagieren, um eine Bremsfunktion zu erfüllen, **dadurch gekennzeichnet, dass** die Vorrichtung einen Aktor nach dem vorhergehenden Anspruch umfasst, der dazu eingerichtet ist, das Spreizen der Backen zu vollziehen.

8. Trommelbremse nach dem vorhergehenden Anspruch, **dadurch gekennzeichnet, dass** der erfindungsgemäße Aktor (2) einen zweiten Aktor bildet, der geeignet ist, eine zweite Bremsfunktion, insbesondere einer Park- oder Notbremse, innerhalb einer Trommelbremse (1) sicherzustellen, welche eine erste Bremsfunktion, insbesondere Betriebsbremsfunktion (11), unter der Wirkung eines ersten Aktors (11) sicherstellt, der dazu eingerichtet ist, erste Enden (121, 131) der beiden Backen (12, 13), sogenannte bewegliche Enden, voneinander zu entfernen, während ihre auf der gegenüberliegenden Seite befindlichen zweiten Enden (122, 132), sogenannte Anschlagenden, an einem gegenüber der Platte (10) festen Verankerungselement (21) in Anschlag gelangen, und dass der zweite Aktor dazu eingerichtet ist, die Anschlagenden (122, 132) der Backen voneinander zu entfernen, während ihre beweglichen Enden (121, 131) mittels eines gegenüber der Platte (10) beweglichen Zwischenelements (14) aneinander in Anlage sind, und dass die Anschlagenden geeignet sind, eines nach dem anderen an einem gegenüber der Platte (10) festen Verankerungselement (21) in Anlage zu gelangen.

9. Bremse für ein Fahrzeug oder eine Untereinheit eines Fahrzeugs, insbesondere Straßenfahrzeugs, umfassend eine Bremsscheibe, die mit Bremsbelägen interagiert, um eine erste Bremsfunktion, insbesondere einer Betriebsbremse zu erfüllen, wobei die Vorrichtung ferner eine Trommelbremsvorrichtung (1) nach Anspruch 7 umfasst, die dazu eingerichtet ist, eine zweite Bremsfunktion, insbesondere einer Park-und/oder Notbremse sicherzustellen, und dass ihre Trommel mit der Bremsscheibe fest verbunden und zu dieser koaxial ist.

10. Fahrzeug oder Untereinheit eines Fahrzeugs, umfassend ein Aktorelement (2) nach Anspruch 6, oder eine Bremse nach einem der Ansprüche 7 bis 9.

11. Verfahren zur Montage eines Getriebemotorelements (5) nach einem der Ansprüche 1 bis 5 oder eines Aktors nach Anspruch 6 oder einer Trommelbremse nach einem der Ansprüche 7 bis 9 oder eines Fahrzeugs nach Anspruch 10,
wobei das Verfahren **dadurch gekennzeichnet ist, dass** es die folgenden Arbeitsschritte in dieser Reihenfolge oder in einer anderen Reihenfolge umfasst:
- Auswählen eines Elektromotors (52) mit einem bestimmten Durchmesser um eine Rotationsachse A5 aus einer Vielzahl von Motoren mit unterschiedlichen Durchmessern;
- Auswählen eines Festsetzmantels, der eine geeignete Abmessung aufweist, um den ausgewählten Elektromotor (52) in radialem Kontakt zu umschließen und um ein spielfreies Positionieren zwischen dem Elektromotor (52) und dem Gehäuse (51) des Getriebemotors (5) zu ermöglichen;
- Zusammenfügen des Motors und des Festsetzmantels innerhalb der Aufnahme des Getriebemotorgehäuses (51);
- Befestigen der hinteren Abdeckung (54) an dem Gehäuse (51).

## Claims

1. Geared motor element (5) for driving an actuator (2) arranged in order to move apart shoes of a drum brake for a vehicle, in particular a motor vehicle, said geared motor element comprising:
- at least one, and for example a single, electric motor (52) rotating about an axis (A5) driving, via a reduction mechanism (55), an output shaft (557) capable of being connected to said actuator,
- a geared motor housing (51) of elongated shape, preferably cylindrical, containing the at least one electric motor (52) and the reduction mechanism (55),
**characterized in that** the electric motor (52) is positioned inside a motor recess (25) within said housing, longitudinally with respect to its axis of rotation (A5), said recess opening outside the housing via an input opening, and **in that** the motor recess of the geared motor housing (51) has characteristics, including at least one geometrical shape, dimensions and means for fixing the motor, which are suitable for receiving, equally well, a plurality of models of electric motors having different diameters with respect to said axis of rotation (A5).

2. Geared motor element (5) for a drum brake according to claim 1, **characterized in that** at least one cylindrical shim casing (53), preferably tubular, is mounted around and in contact with the at least one electric motor (52) and in radial contact with an internal wall of the motor recess, making it possible to hold the electric motor (52) in position and without play with respect to the geared motor housing (51).

3. Geared motor element (5) for a drum brake according to any one of claims 1 or 2, **characterized in that** a rear cover (54), closing the opening of the motor recess of the housing (51), has a cylindrical shim casing referred to as "rear" (541) extending
axially (A5) in a single piece from the wall (542) of the rear cover and surrounding the at least one electric motor (52) in radial contact, so as to hold said electric motor (52), in position without play in particular in combination with a cylindrical shim casing (53) surrounding said motor, with respect to the geared motor housing (51).

4. Geared motor element (5) for a drum brake according to claim 2 or 3, **characterized in that** the at least one cylindrical shim casing (53, 541) is made of a material forming a shield against the electromagnetic interference produced by the at least one electric motor (52).

5. Geared motor element (5) for a drum brake according to one of claims 2 to 4, **characterized in that** the at least one cylindrical shim casing (53, 541) is made of a heat-conducting material so as to produce a thermal diffuser for the heat produced by the at least one electric motor (52).

6. Drum brake actuator (2) arranged in order to move apart two shoes of a drum brake so as to carry out a braking function,
**characterized in that** it is driven by a geared motor element (5) according to any one of claims 1 à 5.

7. Drum brake for a vehicle or vehicle sub-assembly, in particular for a road vehicle, comprising shoes equipped with friction linings capable of being moved apart from one another in order to interact by friction with a drum in order to carry out a braking function,
**characterized in that** said device comprises an actuator according to the preceding claim, which is arranged in order to carry out said moving apart of the shoes.

8. Drum brake according to the preceding claim, **characterized in that** the actuator (2) according to the invention forms a second actuator capable of providing a second braking function, in particular
as a parking or emergency brake, within a drum brake (1) providing a first braking function, in particular as a service brake (11), under the effect of a first actuator (11) arranged in order to move apart from one another the first ends (121, 131) of the two shoes (12, 13), referred to as mobile ends, while their second ends (122, 132) situated on the opposite side, referred to as stop ends, abut against an anchor (21) fixed to the plate (10);
and **in that** said second actuator is arranged in order to move apart from one another the stop ends (122, 132) of the shoes, while their mobile ends (121, 131) are pressed against one another via a spacer element (14) that is mobile with respect to the plate (10), and said stop ends are capable, one at a time, of pressing against an anchor (21) fixed to the plate (10).

9. Brake for a vehicle or vehicle sub-assembly, in particular for a road vehicle, comprising a brake disc interacting with brake pads in order to carry out a first braking function, in particular as a service brake,
said device also comprising a drum brake device (1) according to claim 7 arranged in order to provide a second braking function, in particular as a parking and/or emergency brake, and in which its drum is firmly fixed to, and coaxial with, said brake disc.

10. Vehicle or vehicle sub-assembly comprising an actuator element (2) according to claim 6, or a brake according to any one of claims 7 to 9.

11. Method for assembling a geared motor element (5) according to any one of claims 1 to 5, or an actuator according to claim 6, or a drum brake according to any one of claims 7 to 9, or a vehicle according to claim 10, said method being **characterized in that** it comprises the following operations, in this order or in another order:
- choosing an electric motor (52) with a determined diameter about an axis of rotation (A5), within a plurality of motors of different diameters;
- choosing a cylindrical shim casing having a dimension suitable for surrounding the chosen electric motor (52) in radial contact and allowing positioning without play between said electric motor (52) and the housing (51) of the geared motor (5);
- assembling said motor and said cylindrical shim casing together and inside the recess of the geared motor housing (51);
- fixing the rear cover (54) onto the housing (51).
